# EUROPEAN PATENT APPLICATION

(11) **EP 4 616 916 A1**
(43) Date of publication of application: **17.09.2025**
(21) Application number: 24196732.2
(22) Date of filing: 27.08.2024
(51) Int. Cl.: A62C 3/16, A62C 35/02, A62C 35/58, H01M 50/204, H01M 50/251

(54) **FIRE EXTINGUISHING DEVICE AND METHOD FOR ENERGY STORAGE SYSTEM**

(30) Priority: 12.03.2024 KR 20240034419
(71) Applicant: SAMSUNG SDI CO., LTD., Giheung-gu Yongin-si, Gyeonggi-do 17084 (KR)
(72) Inventor: KIM, Tae Jun, 16678 Suwon-si (KR); HAN, Sang Tae, 16678 Suwon-si (KR); LEE, Choong Hoon, 16678 Suwon-si (KR); AHN, Gi Jang, 16678 Suwon-si (KR)
(74) Representative: Marks & Clerk LLP

(57) **Abstract**

A fire extinguishing device (1) and method for an energy storage system are disclosed. A fire extinguishing device includes a storage box (10) located at a rear of a rack frame (100) and storing a fire extinguishing agent, a supplier (20) connected to the storage box and configured to supply the fire extinguishing agent, a distributer (30) connected to the supplier (20) and configured to distribute the fire extinguishing agent, a rack pipe (40) connected to the distributer and configured to change a flow direction of the fire extinguishing agent to a height direction of the rack frame (100) , and a spray pipe (50) connected to the rack pipe (40) and configured to spray the fire extinguishing agent on each battery module (200) in the rack frame (100).

## Description

### BACKGROUND

### 1. Field

Aspects of embodiments of the present disclosure relate to a fire extinguishing device and method for an energy storage system.

### 2. Description of the Related Art

In general, an energy storage system or energy storage device (ESS) is a system capable of storing surplus electricity or electricity produced using renewable energy. Power supply and demand may be smoothly controlled by storing idle electric power during periods of low electricity demand and then supplying the electricity during periods of high electricity demand using the ESS.

In a space or facility where the ESS is installed and operated, equipment for suppressing battery fires caused by an electric shock, a short circuit, an external surge, or the like, has to be mandatorily installed. A general fire extinguishing system includes a fire detection sensor, a sprinkler installed around a battery rack or on the ceiling, a fire extinguishing agent sprayer, and the like.

As an energy density of batteries continues to increase, an amount of flame and ejection pressure at vents of battery cells are increasing, making it difficult to extinguish or suppress fires early with general fire suppression equipment. Therefore, a demand for an ESS fire extinguishing system capable of effectively suppressing multiple battery fires and extinguishing a high-pressure fire early in the event of a fire is increasing.

The above-described information disclosed in the technology that forms the background of the present disclosure is provided to improve understanding of the background of the present disclosure, and thus may include information that does not constitute the related art.

### SUMMARY

According to an aspect of embodiments of the present disclosure, a fire extinguishing device and method for an energy storage system capable of improving a fire extinguishment speed by quickly supplying a fire extinguishing agent to various fire points is provided.

The above and other aspects and features of the present disclosure will be described in or will be apparent from the following description of some example embodiments of the present disclosure.

According to one or more embodiments of the present disclosure, a fire extinguishing device for an energy storage system includes a storage box located at a rear of a rack frame and storing a fire extinguishing agent, a supplier connected to the storage box and configured to supply the fire extinguishing agent, a distributer connected to the supplier and configured to distribute the fire extinguishing agent, a rack pipe connected to the distributer and configured to change a flow direction of the fire extinguishing agent to a height direction of the rack frame, and a spray pipe connected to the rack pipe and configured to spray the fire extinguishing agent on each battery module in the rack frame.

The supplier may include a supply pipe connecting the storage box and the distributer and a supply pump on the supply pipe to discharge the fire extinguishing agent stored in the storage box.

The storage box may be located higher than the supply pump.

The supply pipe may include a first supply pipe connecting the storage box and the supply pump, and a second supply pipe extending from the supply pump between the rack pipe and connected to the distributer.

The supplier may further include a supply valve on the supply pipe to prevent a backflow of the fire extinguishing agent.

The supply pipe may be located between a pair of neighboring rack frames.

The supply pipe may be located in a central portion of a plurality of rack frames arranged in a row.

The distributer may include a distribution pipe connected to the supplier, arranged to cross the rack frame, and connected to the rack pipe and a distribution valve on the distribution pipe to distribute the fire extinguishing agent.

The distribution valve may distribute the fire extinguishing agent supplied from the supplier in two directions.

The distributer may be located between low and high points of the rack frame.

The distributer may be located between 50% and 90% of the height of the rack frame.

The fire extinguishing device for an energy storage system may further include a sensor configured to detect a fire in the battery module and a controller configured to control the supplier and the distributer according to a detection signal of the sensor to adjust a flow rate of the fire extinguishing agent.

The sensor may be on the rack pipe.

The sensor may detect temperature or smoke.

According to one or more embodiments of the present disclosure, a fire extinguishing method for an energy storage system includes detecting, by a sensor, a fire in one or more battery modules stored in a rack frame, supplying a fire extinguishing agent stored in a storage box located at a rear of the rack frame through a supplier when the sensor detects a fire, distributing the fire extinguishing agent such that a distributer connected to the supply unit crosses the rack frame, and spraying, by spray pipes connected to the rack frame, the fire extinguishing agent.

In the detecting, a one-way fire or a two-way fire may be detected based on the supplier.

The supplier may supply the fire extinguishing agent between a pair of neighboring rack frames.

In a case of the one-way fire, the distributer may allow flow of the fire extinguishing agent in only one direction, and, in a case of the two-way fire, the distributer may allow a flow rate of the fire extinguishing agent in two directions.

A distribution ratio of the fire extinguishing agent may be varied depending on a number of the battery modules where a fire occurs.

At least some of the above and other features of the invention are set out in the claims.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings.
FIG. 1 is a plan view schematically showing a fire extinguishing device for an energy storage system according to an embodiment of the present disclosure;
FIG. 2 is a front view schematically showing the fire extinguishing device for an energy storage system according to an embodiment of the present disclosure;
FIG. 3 is a view schematically showing a supply unit according to an embodiment of the present disclosure;
FIG. 4 is a view schematically showing a state in which a supply pipe is disposed between a pair of rack frames according to an embodiment of the present disclosure;
FIG. 5 is a view schematically showing a state in which the supply pipe is disposed in a central portion of a plurality of rack frames arranged in a row according to an embodiment of the present disclosure;
FIG. 6 is a plan view schematically showing a distribution unit according to an embodiment of the present disclosure;
FIG. 7 is a front view schematically showing the distribution unit according to an embodiment of the present disclosure;
FIG. 8 is a view schematically showing a sensor according to an embodiment of the present disclosure;
FIG. 9 is a flowchart schematically showing a fire extinguishing method for an energy storage system according to an embodiment of the present disclosure;
FIG. 10 is a view schematically showing a one-way fire according to an embodiment of the present disclosure;
FIG. 11 is a view schematically showing a two-way fire according to an embodiment of the present disclosure;
FIG. 12 is a graph comparing a fire extinguishing agent arrival time by a fire extinguishing device for an energy storage system according to an embodiment of the present disclosure with that of a conventional fire extinguishing device;
FIG. 13 is a view schematically showing an arrival time of a fire extinguishing agent according to a height of a distribution unit when a fire is detected at a lower end of a pair of rack pipes according to an embodiment of the present disclosure; and
FIG. 14 is a view schematically showing an arrival time of a fire extinguishing agent according to the height of the distribution unit when a fire is detected at an upper end of a pair of rack pipes according to an embodiment of the present disclosure.

### DETAILED DESCRIPTION

Herein, some embodiments of the present disclosure will be described in further detail with reference to the accompanying drawings. The terms or words used in this specification and claims are not to be construed as being limited to the usual or dictionary meaning and are to be interpreted as having a meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

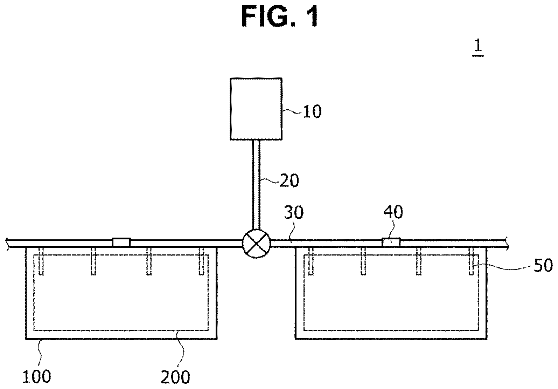

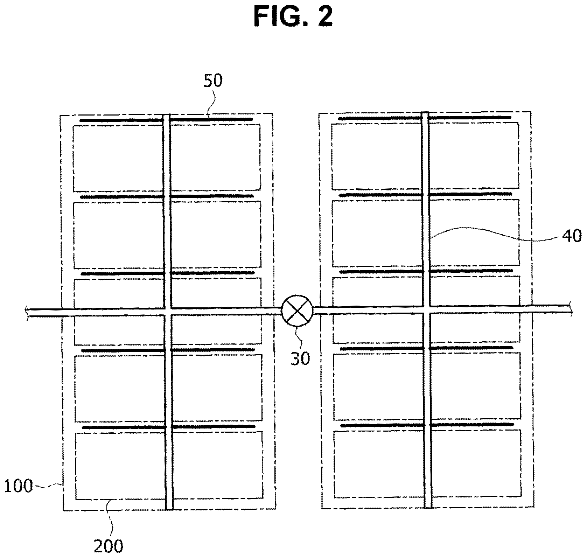

FIG. 1 is a plan view schematically showing a fire extinguishing device for an energy storage system according to an embodiment of the present disclosure; and FIG. 2 is a front view schematically showing the fire extinguishing device for an energy storage system according to an embodiment of the present disclosure. Referring to FIGS. 1 and 2, a fire extinguishing device 1 for an energy storage system according to an embodiment of the present disclosure includes a storage box 10, a supply unit, or supplier, 20, a distribution unit, or distributor, 30, a rack pipe 40, and a spray pipe 50.

The storage box 10 may be located at a rear of a rack frame 100, and may store a fire extinguishing agent. The fire extinguishing agent stored in the storage box 10 may include one or more of argon, nitrogen, and carbon dioxide. When carbon dioxide is used as the fire extinguishing agent, carbon dioxide may be liquefied and stored in a low temperature and high pressure state. The storage box 10 may be mounted inside or outside a housing into which a plurality of rack frames 100 are built. The storage box 10 may provide the fire extinguishing agent to a pair of rack frames 100. In an embodiment, the storage box 10 may provide the fire extinguishing agent to three or more rack frames 100.

The supply unit 20 may be connected to the storage box 10, and may supply the fire extinguishing agent. In an embodiment, the supply unit 20 may be connected to a lower portion of the storage box 10 to discharge the fire extinguishing agent stored in the storage box 10.

The distribution unit 30 may be connected to the supply unit 20 to distribute the fire extinguishing agent. The distribution unit 30 may distribute the fire extinguishing agent such that the fire extinguishing agent supplied from the rear moves in both left and right directions or in one direction.

The rack pipe 40 may be connected to the distribution unit 30, and may change a flow direction of the fire extinguishing agent to a height direction of the rack frame 100. The rack pipe 40 may be disposed at the rear or front of each of the rack frames 100.

The spray pipe 50 may be connected to the rack pipe 40, and may spray the fire extinguishing agent on each battery module 200 in (e.g., built into) the rack frame 100. In an embodiment, a plurality of spray pipes 50 may be arranged in vertical and longitudinal directions of the rack frame 100, and may be disposed above the respective battery modules 200. A spray hole may be formed in the spray pipe 50, and the spray hole may be opened in the event of a fire.

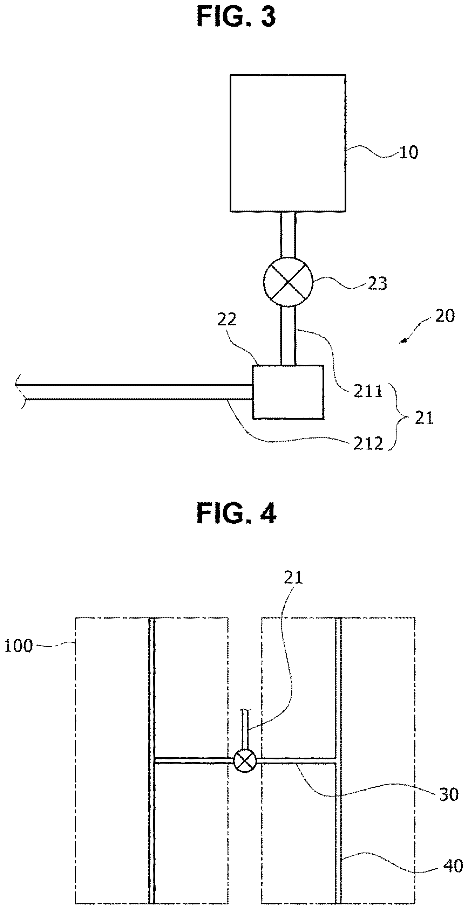

FIG. 3 is a view schematically showing the supply unit according to an embodiment of the present disclosure. Referring to FIG. 3, the supply unit 20 according to an embodiment of the present disclosure may include a supply pipe 21 and a supply pump 22.

The supply pipe 21 may connect the storage box 10 and the distribution unit 30. In an embodiment, the supply pipe 21 may be connected to a bottom of the storage box 10, and may guide the fire extinguishing agent stored in the storage box 10 to the distribution unit 30 when a fire occurs in the battery modules 200.

The supply pump 22 may be located on the supply pipe 21, and may discharge the fire extinguishing agent stored in the storage box 10. When power is applied, the supply pump 22 may be driven to pump the fire extinguishing agent stored in the storage box 10 toward the distribution unit 30. In an embodiment, the storage box 10 may be disposed higher than the supply pump 22 to prevent or substantially prevent overload when the supply pump 22 is driven.

In an embodiment, the supply pipe 21 may include a first supply pipe 211 and a second supply pipe 212.

The first supply pipe 211 may connect the storage box 10 and the supply pump 22. When the supply pump 22 is disposed below the storage box 10, an upper end of the first supply pipe 211 may be connected to a lower portion of the storage box 10 and a lower end of the first supply pipe 211 may be connected to the supply pump 22.

The second supply pipe 212 may extend from the supply pump 22 between the rack pipes 40, and may be connected to the distribution unit 30. In an embodiment, the supply pump 22 is built into the supply pipe 21, and the second supply pipe 212 may be directly connected to the first supply pipe 211.

The supply unit 20 according to an embodiment of the present disclosure may further include a supply valve 23. The supply valve 23 may be located on the supply pipe 21, and may prevent or substantially prevent a backflow of the fire extinguishing agent. In an embodiment, the supply valve 23 may be a check valve that allows a one-way fluid flow.

FIG. 4 is a view schematically showing a state in which the supply pipe is disposed between a pair of rack frames according to an embodiment of the present disclosure. Referring to FIG. 4, the supply pipe 21 may be disposed between a pair of neighboring rack frames 100. The storage box 10 may be disposed at the rear of the pair of rack frames 100, and the supply pipe 21 connected to the storage box 10 may be disposed between the pair of rack frames 100 and connected to the distribution unit 30 that crosses the pair of rack frames 100. In this way, the fire extinguishing agent may be quickly supplied in directions of the rack frames 100 disposed on both left and right sides of the supply pipe 21, respectively.

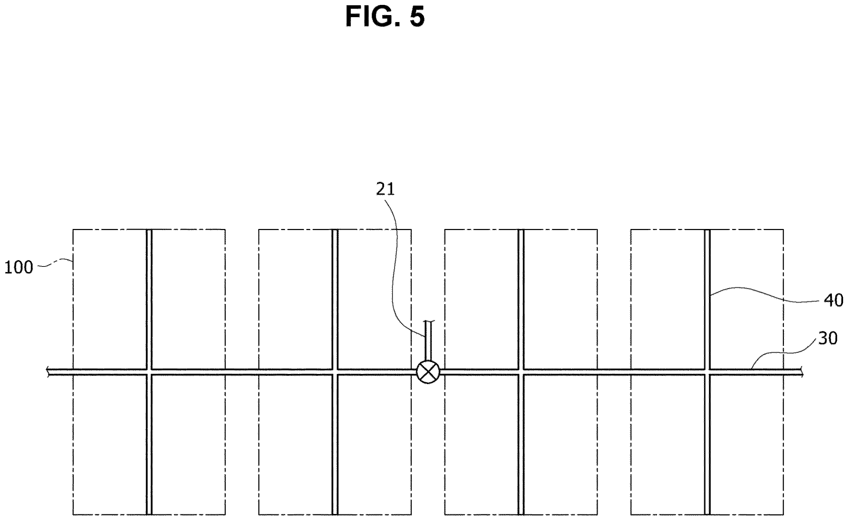

FIG. 5 is a view schematically showing a state in which the supply pipe is disposed in a central portion of a plurality of rack frames arranged in a row according to an embodiment of the present disclosure. Referring to FIG. 5, a plurality of supply pipes 21 may be disposed in the central portion of a plurality of rack frames 100 arranged in a row. For example, when four rack frames 100 are arranged in a row, the rack frames may be designated from left to right as first to fourth racks. The storage box 10 may be disposed at the rear of the four rack frames 100, and the supply pipe 21 connected to the storage box 10 may be disposed between the second rack and the third rack and connected to the distribution unit 30 that crosses the rack frames 100. In this way, the fire extinguishing agent may be quickly supplied in directions of the plurality of rack frames 100 disposed on both left and right sides of the supply pipe 21, respectively.

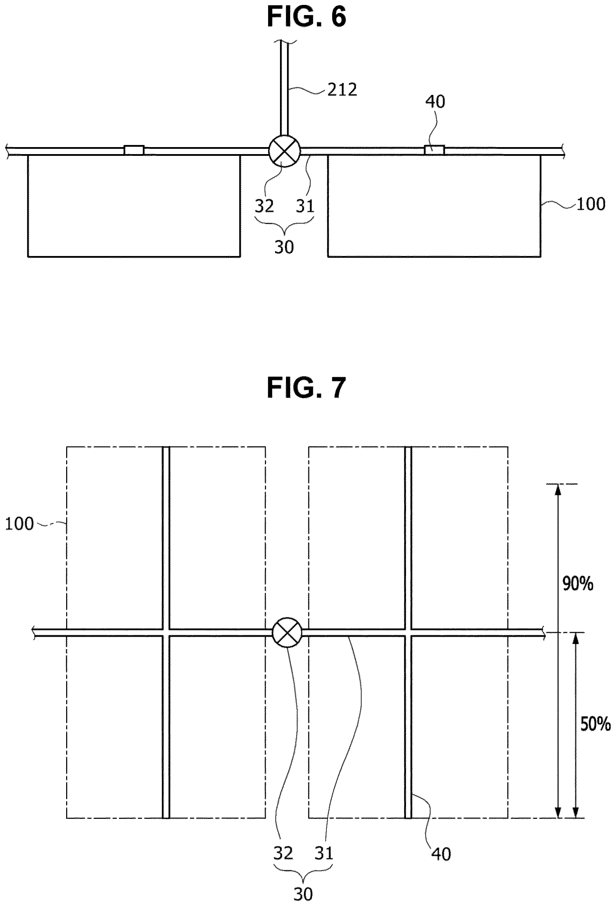

FIG. 6 is a plan view schematically showing the distribution unit according to an embodiment of the present disclosure; and FIG. 7 is a front view schematically showing the distribution unit according to an embodiment of the present disclosure. Referring to FIGS. 6 and 7, the distribution unit 30 according to an embodiment of the present disclosure may include a distribution pipe 31 and a distribution valve 32.

The distribution pipe 31 may be connected to the supply unit 20, disposed to cross the rack frame 100, and connected to the rack pipe 40. The distribution pipe 31 may be disposed at the rear of the rack frame 100. In addition, the distribution pipe 31 may be disposed at the front of the rack frame 100. The distribution pipe 31 may be connected to the second supply pipe 212. The distribution pipe 31 may be disposed at a same height as the second supply pipe 212, or may be disposed lower than the second supply pipe 212.

The distribution valve 32 may be located on the distribution pipe 31, and may distribute the fire extinguishing agent. The distribution valve 32 may connect the second supply pipe 212 and the distribution pipe 31. In an embodiment, the distribution valve 32 may be a three-way valve that distributes the fire extinguishing agent flowing from the second supply pipe 212 to both left and right sides. The distribution valve 32 may distribute the fire extinguishing agent in one direction or two directions, and may adjust a distribution ratio of both directions as desired.

The distribution unit 30 may be disposed between low and high points of the rack frame 100. The distribution unit 30 may be disposed to cross the rack frame 100 at a height between the low and high points of the rack frame 100. In an embodiment, the distribution pipe 31 or the distribution valve 32 may be disposed between 50% and 90% of the height of the rack frame 100. That is, the distribution pipe 31 or the distribution valve 32 may be disposed between a mid-height of the rack frame 100 and a height 10% lower than a highest point of the rack frame 100.

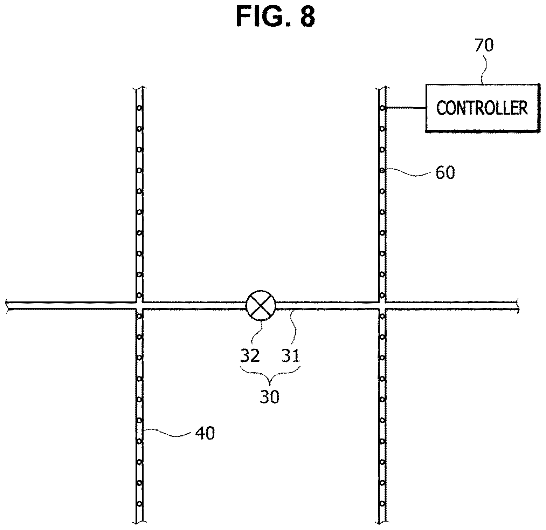

FIG. 8 is a view schematically showing a sensor according to an embodiment of the present disclosure. The fire extinguishing device 1 for an energy storage system according to an embodiment of the present disclosure may further include a sensor 60 and a controller 70.

The sensor 60 may detect a fire in the battery modules 200, and the controller 70 may control the supply unit 20 and the distribution unit 30 according to a detection signal of the sensor 60 to adjust a flow rate of the fire extinguishing agent.

The sensor 60 may be disposed on the rack pipe 40. The rack pipe 40 may have a length in a height direction of the rack frame 100, and the sensor 60 may detect a fire in the battery modules 200 mounted on the rack frame 100 in a vertical direction. The sensor 60 may detect a fire in each battery module 200. The sensor 60 may detect a temperature, smoke, or flame of the battery module 200. In an embodiment, the sensor 60 may be provided on the spray pipe 50.

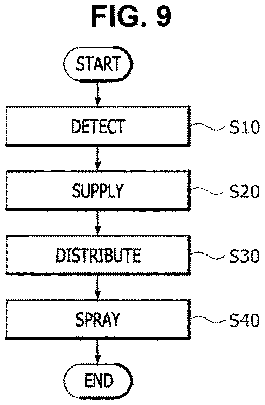

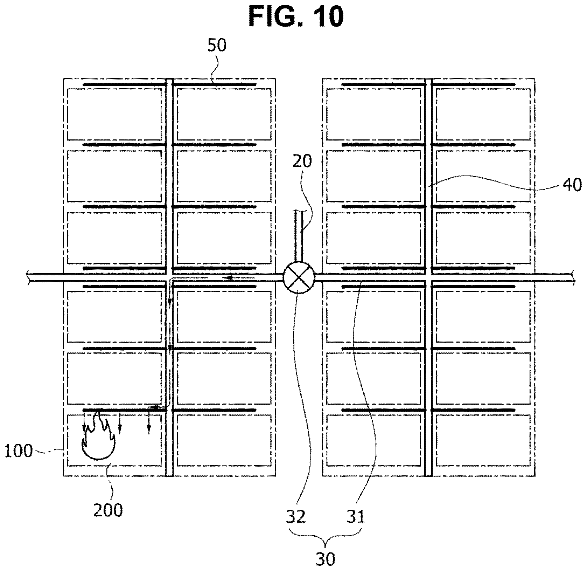

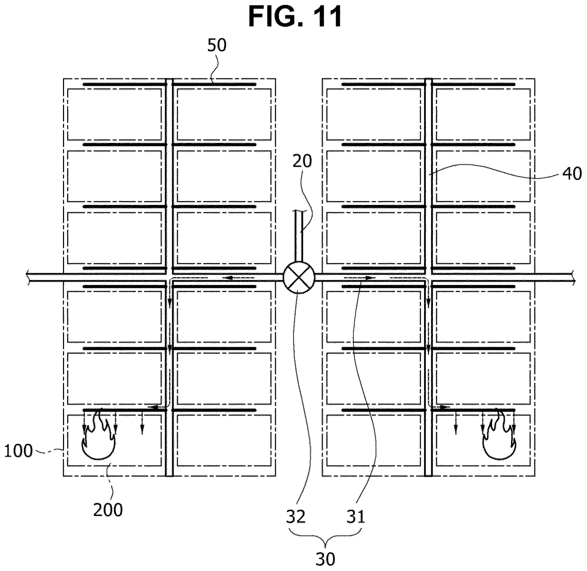

FIG. 9 is a flowchart schematically showing a fire extinguishing method for an energy storage system according to an embodiment of the present disclosure; FIG. 10 is a view schematically showing a one-way fire according to an embodiment of the present disclosure; and FIG. 11 is a view schematically showing a two-way fire according to an embodiment of the present disclosure. The fire extinguishing method for an energy storage system according to an embodiment of the present disclosure will be described with reference to FIGS. 9 to 11 as follows.

In a detecting operation or step S10, the sensor 60 may detect a fire in the battery modules 200 stored in the rack frame 100. The sensor 60 may be mounted on the rack pipe 40 disposed in the vertical direction of the rack frame 100, and may detect a fire in each of the plurality of battery modules 200.

The storage box 10 may be disposed at the rear of the plurality of rack frames 100, and the supply unit 20 that supplies the fire extinguishing agent stored in the storage box 10 may guide the fire extinguishing agent between the plurality of rack frames 100. In an embodiment, the supply unit 20 may be disposed at a midpoint of the rack frames 100 horizontally arranged in a row, and the controller 70 may determine whether the fire is a one-way fire or a two-way fire through a detection signal transmitted from each sensor 60. The one-way fire may mean that a fire occurs in any one of the left or right direction of the supply unit 20. The two-way fire may mean that a fire occurs in both the left and right directions of the supply unit 20.

In a supplying operation or step S20, the fire extinguishing agent stored in the storage box 10 disposed at the rear of the rack frame 100 may be supplied through the supply unit 20 when the sensor 60 detects a fire. When the sensor 60 detects a fire, the controller 70 may forcibly discharge the fire extinguishing agent stored in the storage box 10 by driving the supply pump 22. The supply unit 20 may supply the fire extinguishing agent between a pair of neighboring rack frames 100.

In a distributing operation or step S30, the fire extinguishing agent may be distributed such that the distribution unit 30 connected to the supply unit 20 crosses the rack frame 100. When the supply unit 20 guides the fire extinguishing agent between the rack frames 100, the distribution unit 30 may distribute a flow amount of the fire extinguishing agent in any of left and right directions, depending on a fire situation.

In the case of the one-way fire, the distribution unit 30 may allow a flow rate of the fire extinguishing agent in only one direction. As an example, when a fire occurs in a battery module 200 provided in the rack frame 100 disposed on the left side based on the supply unit 20, the fire extinguishing agent guided to the supply unit 20 may be moved to the left by the distribution unit 30 and movement thereof to the right may be restricted. In this way, a large amount of fire extinguishing agent may be quickly supplied to the left.

In the case of the two-way fire, the distribution unit 30 may allow the flow rate of the fire extinguishing agent in both, or two or opposite, directions. As an example, when a fire occurs in battery modules 200 provided in the rack frames 100 disposed on both sides based on the supply unit 20, the fire extinguishing agent guided to the supply unit 20 may be moved to the left and right by the distribution unit 30. In this way, the fire extinguishing agent may be quickly supplied to the left and right.

In an embodiment, a distribution ratio of the fire extinguishing agent may be varied depending on the number of the battery modules 200 where a fire occurs. As an example, when a fire occurs in one battery module 200 on the left side based on the supply unit 20 and a fire occurs in two battery modules 200 on the right side, the distribution unit 30 may adjust a supply amount of fire extinguishing agent moved to the left and right at a ratio of 1:2.

In a spraying operation or step S40, the spray pipe 50 connected to the rack frame 100 may spray the fire extinguishing agent. The spray pipe 50 may be connected to the rack pipe 40 disposed in a height direction of the rack frame 100, and may be disposed above each battery module 200. The spray pipe 50 may open a nozzle when a fire occurs in the battery module 200. The sensor 60 may be additionally disposed on each spray pipe 50.

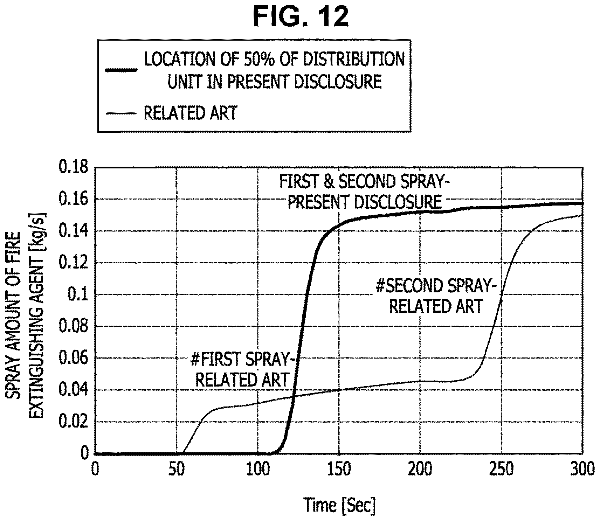

FIG. 12 is a graph comparing a fire extinguishing agent arrival time by a fire extinguishing device for an energy storage system according to an embodiment of the present disclosure with that of a conventional fire extinguishing device. Referring to FIG. 12, it is assumed that the conventional fire extinguishing device of the related art is a fire extinguishing device in which a fire extinguishing agent is supplied from a right side of a right rack frame among two rack frames, and the fire extinguishing device according to the present disclosure is a fire extinguishing device in which a fire extinguishing agent is supplied from a central portion of two rack frames 100.

When a fire occurs concurrently (e.g., simultaneously) in respective battery modules 200 stored in two rack frames 100 (see FIG. 11), in the fire extinguishing device according to the present disclosure, the fire extinguishing agent supplied to the central portion of the two rack frames 100 is distributed to both, or opposite, sides, and the fire extinguishing agent is sprayed onto each battery module 200 after 100 seconds. On the other hand, in the conventional fire extinguishing device, the fire extinguishing agent is first sprayed onto the battery module disposed on the right side of the two rack frames after 50 seconds. Then, after 220 seconds, the fire extinguishing agent is secondarily sprayed onto the battery module disposed on the left side of the two rack frames.

Therefore, compared to the conventional fire extinguishing device, the fire extinguishing device according to the present disclosure shortens a time taken for the fire extinguishing agent to reach a fire point and increases a spray amount of the fire extinguishing agent, thereby quickly treating the fire.

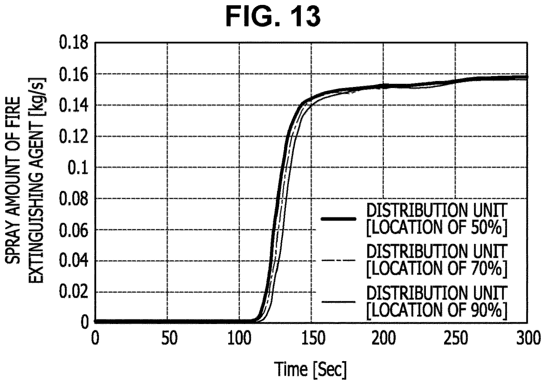

FIG. 13 is a view schematically showing an arrival time of a fire extinguishing agent according to a height of a distribution unit when a fire is detected at a lower end of a pair of rack pipes according to an embodiment of the present disclosure. When a fire occurs in each battery module 200 disposed at a lowest point of the two rack frames 100, a fire extinguishing agent arrival time of the distribution unit 30 disposed at a point of 50% of the height of the rack frame 100 is faster than fire extinguishing agent arrival times of the distribution units 30 located at points of 70% and 90% of the height of the rack frame 100. That is, when a fire occurs at the lowest point, the most efficient fire extinguishing operation is performed when the fire extinguishing agent is distributed from the distribution unit 30 disposed at a point of 50% of the height of the relatively lowest rack frame 100.

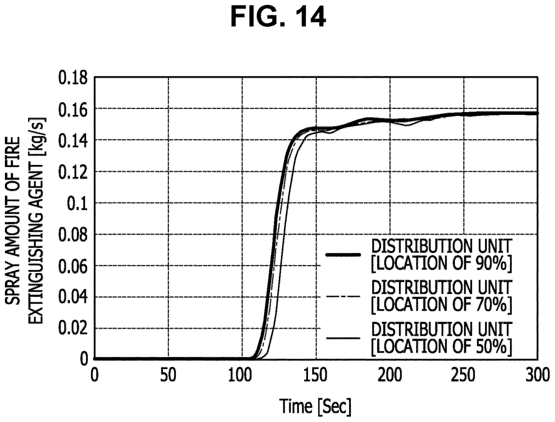

FIG. 14 is a view schematically showing an arrival time of a fire extinguishing agent according to the height of the distribution unit when a fire is detected at an upper end of a pair of rack pipes according to an embodiment of the present disclosure. When a fire occurs in each battery module 200 disposed at a highest point of the two rack frames 100, a fire extinguishing agent arrival time of the distribution unit 30 disposed at a point of 90% of the height of the rack frame 100 is faster than the fire extinguishing agent arrival times of the distribution units 30 located at points of 50% and 70% of the height of the rack frame 100. That is, when a fire occurs at a highest point, the most efficient fire extinguishing operation is performed when the fire extinguishing agent is distributed from the distribution unit 30 disposed at the point of 90% of the height of the relatively highest rack frame 100.

In FIGS. 13 and 14, it can be seen that the arrival time of the fire extinguishing agent and the spray amount of the fire extinguishing agent are optimized when the height of the distribution unit 30 is 50% to 90% of the height of the rack frame 100.

In a fire extinguishing device and method for an energy storage system according to an embodiment of the present disclosure, a fire extinguishing agent stored in a storage box located at the rear of a plurality of rack frames can be supplied to a midpoint of the rack frames and then distributed, thereby quickly spraying the fire extinguishing agent in the event of a one-way or two-way fire.

In the fire extinguishing device and method for an energy storage system according to one or more embodiments of the present disclosure, a supply unit disposed below the storage box can forcibly pump the fire extinguishing agent and supply the fire extinguishing agent between rack pipes.

In the fire extinguishing device and method for an energy storage system according to one or more embodiments of the present disclosure, a distribution unit can be disposed at 50% to 90% of the height of the rack frame, thereby quickly spraying the fire extinguishing agent in the event of a fire in battery modules arranged at various positions of the rack frame.

However, aspects and effects obtainable through the present disclosure are not limited to the above aspects and effects, and other technical aspects and effects that are not mentioned will be clearly understood by those skilled in the art from the following description of the present disclosure.

While the present disclosure has been described with reference to some embodiments shown in the drawings, these embodiments are merely illustrative and it is to be understood that various modifications and equivalent other embodiments can be derived by those skilled in the art on the basis of the embodiments.

Therefore, the technical scope of the present disclosure should be defined by the claims.

## Claims

1. A fire extinguishing device for an energy storage system, the fire extinguishing device comprising:
a storage box located at a rear of a rack frame and storing a fire extinguishing agent;
a supplier connected to the storage box and configured to supply the fire extinguishing agent;
a distributer connected to the supplier and configured to distribute the fire extinguishing agent;
a rack pipe connected to the distributer and configured to change a flow direction of the fire extinguishing agent to a height direction of the rack frame; and
a spray pipe connected to the rack pipe and configured to spray the fire extinguishing agent on each battery module in the rack frame.

2. The fire extinguishing device as claimed in claim 1, wherein the supplier comprises:
a supply pipe connecting the storage box and the distributer; and
a supply pump on the supply pipe to discharge the fire extinguishing agent stored in the storage box.

3. The fire extinguishing device as claimed in claim 2, wherein the storage box is located higher than the supply pump.

4. The fire extinguishing device as claimed in claim 2 or claim 3, wherein the supply pipe comprises:
a first supply pipe connecting the storage box and the supply pump; and
a second supply pipe extending from the supply pump between the rack pipe and connected to the distributer.

5. The fire extinguishing device as claimed in any one of claims 2 to 4, wherein the supplier further comprises a supply valve on the supply pipe to prevent a backflow of the fire extinguishing agent.

6. The fire extinguishing device as claimed in any one of claims 2 to 5, wherein the supply pipe is between a pair of neighboring rack frames.

7. The fire extinguishing device as claimed in any one of claims 2 to 6, wherein the supply pipe is at a central portion of a plurality of rack frames arranged in a row.

8. The fire extinguishing device as claimed in any one of the preceding claims, wherein the distributer comprises:
a distribution pipe connected to the supplier, arranged to cross the rack frame, and connected to the rack pipe; and
a distribution valve on the distribution pipe to distribute the fire extinguishing agent.

9. The fire extinguishing device as claimed in claim 8, wherein the distribution valve distributes the fire extinguishing agent supplied from the supplier in two directions.

10. The fire extinguishing device as claimed in claim 8 or claim 9, wherein the distributer is between low and high points of the rack frame.

11. The fire extinguishing device as claimed in any one of the preceding claims, further comprising:
a sensor configured to detect a fire in the battery module; and
a controller configured to control the supplier and the distributer according to a detection signal of the sensor to adjust a flow rate of the fire extinguishing agent.

12. The fire extinguishing device as claimed in claim 11, wherein the sensor is on the rack pipe.

13. A fire extinguishing method for an energy storage system, the fire extinguishing method comprising:
detecting, by a sensor, a fire in one or more battery modules stored in a rack frame;
supplying a fire extinguishing agent stored in a storage box located at a rear of the rack frame through a supplier when the sensor detects a fire;
distributing the fire extinguishing agent such that a distributer connected to the supplier crosses the rack frame; and
spraying, by a spray pipe connected to the rack frame, the fire extinguishing agent.

14. The fire extinguishing method as claimed in claim 13, wherein in the detecting, a one-way fire or a two-way fire is detected based on the supplier.

15. The fire extinguishing method as claimed in claim 14, wherein, in a case of the one-way fire, the distributer allows a flow rate of the fire extinguishing agent in only one direction.
